# EUROPÄISCHE PATENTSCHRIFT

(11) **EP 1 322 939 B1**
(45) Veröffentlichungstag und Bekanntmachung des Hinweises auf die Patenterteilung: **02.05.2007**
(21) Anmeldenummer: 01971461.7
(22) Anmeldetag: 27.09.2001
(51) Int. Cl.: G01N 21/71, G01N 21/63

(54) **VORRICHTUNG ZUR CHEMISCHEN ANALYSE VON MATERIALPROBEN**
DEVICE USED FOR THE CHEMICAL ANALYSIS OF MATERIAL SAMPLES
DISPOSITIF D'ANALYSE CHIMIQUE D'ECHANTILLONS DE MATIERE

(30) Priorität: 28.09.2000 AT 20001647
(43) Veröffentlichungstag der Anmeldung: 02.07.2003
(73) Patentinhaber: Voest-Alpine Industrieanlagenbau GmbH & Co, 4031 Linz (AT)
(72) Erfinder: RAMASEDER, Norbert, A-4020 Linz (AT); HEITZ, Johannes, A-4040 Linz (AT); GRUBER, Johann, A-4921 Hohenzell (AT); BÄUERLE, Dieter, A-4203 Altenberg (AT)
(74) Vertreter: Kopecky, Helmut
(86) Internationale Anmeldenummer: PCT/AT2001/000306
(87) Internationale Veröffentlichungsnummer: WO 2002/027301

(56) Entgegenhaltungen:
- WO-A-99/49301
- DE-A- 3 413 589
- US-A- 4 563 567
- US-A- 4 698 483
- US-A- 4 818 106
- US-A- 4 892 992
- US-A- 4 986 658
- US-A- 4 995 723
- PATENT ABSTRACTS OF JAPAN vol. 2000, no. 02, 29. Februar 2000 (2000-02-29) & JP 11 326206 A (NIPPON STEEL CORP), 26. November 1999 (1999-11-26)
- PATENT ABSTRACTS OF JAPAN vol. 017, no. 329 (P-1561), 22. Juni 1993 (1993-06-22) & JP 05 040094 A (SUMITOMO METAL IND LTD), 19. Februar 1993 (1993-02-19)

## Beschreibung

Die Erfindung betrifft eine Vorrichtung zur chemischen Analyse von festen oder geschmolzenen Materialproben, insbesondere von in einem metallurgischen Gefäß befindlichen Metallschmelzen, wie Stahlschmelzen, basierend auf laserinduzierter Emissionsspektroskopie, mit einer einen Laserstrahl erzeugenden Laserquelle, einer den Laserstrahl umlenkenden Umlenkeinrichtung, einer den Laserstrahl fokussierenden Fokussiereinrichtung sowie einer Rückstrahlen eines vom Laserstrahl auf der Materialprobe gezündeten Plasmas zu einer Auswerteeinrichtung, wie einem Spektrometer, leitenden Einrichtung.

Es können hierdurch z.B. die relativen Anteile einzelner Elemente, wie Eisen, Kohlenstoff, Silizium, Mangan, Kupfer, Chrom, Nickel, Aluminium, Zinn, Zink, Vanadium, Titan, Schwefel und Phosphor in einer festen oder flüssigen Materialprobe, z.B. einer Metallprobe, bestimmt werden. Hierbei wird ein Plasma durch einen konzentrierten Laserstrahl an der Oberfläche einer Materialprobe gezündet, wobei zweckmäßig alle empfindlichen Teile der Auswerteeinrichtung, insbesondere ein Spektrometer, ein Auswerte- und Steuerrechner und die Laserquelle vor Einflüssen der Materialprobe (Hitze, Staub, Radioaktivität etc.) zu schützen sind.

Die Verwendung von laserinduzierter Emissionsspektroskopie zur Analyse metallischer Proben ist z.B. aus der US 4,645,342 A bekannt. Das Analysesystem besteht gemäß diesem Dokument aus einer Laserquelle, deren Strahl auf der Oberfläche einer zu analysierenden Stahlprobe konzentriert wird und dort einen Plasmadurchbruch auslöst. Dabei kommen typischerweise gepulste Laser mit einer Pulslänge zwischen 1 fs und 109 ms und einer Lichtwellenlänge zwischen 120 nm und 20000 nm zum Einsatz. Das vom Plasma ausgehende Licht enthält die Spektrallinien der in der Probe enthaltenen Elemente, so daß aus der spektralen Analyse des emittierten Lichts unter Zuhilfenahme eines Spektrometers mit hoher Genauigkeit auf die Probenzusammensetzung geschlossen werden kann.

In der US 4,986,658 A wird ein System zur Aufnahme von laserinduzierten Emissionsspektren beschrieben, bei dem alle Komponenten in einem gekühlten Gehäuse untergebracht sind. Dieser Aufbau wurde gewählt, um auch flüssige Metallproben bei hohen Temperaturen analysieren zu können. Allerdings müssen dabei das gesamte Detektionssystem und insbesondere die fokussierenden Linsen sehr nahe an die Metallschmelze angenähert werden, so daß wegen der großen Dimensionen dieses Aufbaus viele Einbaulagen, z.B. in einer Düse, von vornherein ausgeschlossen sind. Der geringe Abstand muß auch sehr genau eingehalten werden, da die fokussierenden Linsen wegen der kleinen Brennweite nur eine sehr kleine Fokustiefe besitzen. Zu diesem Zweck ist der Aufbau mit einem zusätzlichen, auf der Triangulationsmethode basierenden, optischen Abstandsmesser bestückt.

Die EP 0 362 577 A zeigt ein Verfahren zur optischen Ankoppelung eines auf laserinduzierter Emissionsspektroskopie basierenden Analysesystems an eine mit einem Fenster versehene Düse. Dadurch wird erreicht, daß man an der Außenseite eines metallurgischen Gefäßes eine Vorrichtung zur Einkopplung des emittierten Lichts in eine optische Faser installieren kann, und man auch den Laser außen am Gefäß plazieren kann. Aber auch an der Außenseite eines metallurgischen Gefäßes, in dem sich eine Metallschmelze befindet, herrschen sehr harte Umgebungsbedingungen, so daß die Anbauten mit aufwendigen Schutzvorrichtungen gegen Hitze, Staubbelastung und Schlackeauswurf versehen werden müssen. Die Justage und Wartung, insbesondere der Laserquelle, ist unter diesen Bedingungen mit größerem Aufwand verbunden.

Der Betrieb der Düse in der Art, daß eine stabile flüssige Oberfläche zur Analyse entsteht, ist schwierig, da es zu Rauchentwicklung in der Düse, Einfrieren der Metallschmelze an dem innenseitigen Düsenende, starken Turbulenzen des Flüssigkeitspegels und zu schnellem Düsenverschleiß kommen kann.

Die WO 97/22859 beschreibt eine Vorrichtung zur Bestimmung von aus einer Metallschmelze ausgehendem Licht, die es durch eine besondere Düsengeometrie und den Einsatz verschiedener Gase erlaubt, eine hinreichend stabile flüssige Metalloberfläche am Ende der Düse zur Verfügung zu stellen. Die Analyse des von der Flüssigkeitsoberfläche ausgehenden Lichts erlaubt eine genaue Temperaturmessung oder, in Kombination mit einem fokussierten Laserstrahl, eine chemische Analyse der Schmelze.

In der WO 99/49301 wird ein Verfahren zur kalibrationsfreien Analyse mittels laserinduzierter Emissionsspektroskopie beschrieben. In dem Verfahren wird durch Vergleich verschiedener Linien eines einzigen Elementes die Temperatur des laserinduzierten Plasmas bestimmt. Durch Aufnahme eines großen Spektralbereichs ist es möglich, die Zusammensetzung der Proben ohne Vergleich zu einer bekannten Referenz zu bestimmen. Allerdings ist sowohl die Aufnahme der Spektren als auch deren Auswertung sehr zeitaufwendig und deshalb für eine schnelle Online-Analyse nicht geeignet.

JP11326206 offenbart eine Vorrichtung zur chemischen Analyse von Metallschmelzen in einem metallurgischen Gefäß mit einer Laserquelle, einerUmlenkeinrichtung, einer bewegbaren Fokussiereinrichtung, und einer Einrichtung zur Leitung der Rückstrahlen zu einem Spektrometer. Weiterhin offenbart JP11326206 einen mit mindestens einem beweglichen Gelenk ausgestatteten Arm mit einem Hohlraum und einem Umlenkspiegel an seiner Gelenkstelle. Die Laserquelle und das Spektrometer sind von der Probe bewegungsunabhängig, ein Spülgas, z.B. Argon wird durch den Arm geleitet, starre Gelenke sind vorhanden und der letzte Armteil ist in der Kippachse des Gefäßes angeordnet.

Die Erfindung bezweckt die Vermeidung der oben genannten Nachteile und Schwierigkeiten und stellt sich die Aufgabe, eine Einrichtung der eingangs beschriebenen Art zu schaffen, die zum kontinuierlichen Betrieb eines auf laserinduzierter Emissionsspektroskopie basierenden Analysesystems unter extrem harten Bedingungen, insbesondere der Metallindustrie, geeignet ist. Hierzu ist es wünschenswert, alle empfindlichen Komponenten des Systems, d.h. die Auswerteeinrichtung, die üblicherweise ein Spektrometer, einen Auswerte- und Steuerrechner umfaßt, sowie die Laserquelle in einem möglichst großen Abstand von der Probenoberfläche entfernt aufzustellen, da sich so der Aufwand für Schutzmaßnahmen gegen rauhe Umgebungsbedingungen bei Betrieb und Wartung entscheidend verringern ließe.

Dieses Problem ist jedoch nach dem Stand der Technik in der Hüttenindustrie nicht gelöst, da es insbesondere bisher nicht möglich war, das Laserlicht derart über weitere Strecken zu transportieren, daß man auf der Materialprobe einen Plasmadurchbruch erzeugen könnte. Ähnliche Problematiken stellen sich auch bei anderen potentiellen Anwendungen der laserinduzierten Emissionsspektroskopie, z.B. bei der Analyse von Materialproben in radioaktiv belasteten Bereichen in Kernreaktoren oder beim Einsatz dieser Methode bei Weltraummissionen. Zwar beschreiben Knight und Koautoren (A.K. Knight et al., Applied Spectroscopy, 54, 331 (2000) ein System zur Aufnahme von laserinduzierten Emissionsspektren, das zum Einbau in eine zukünftige Marssonde konzipiert ist und mit dem es möglich sein soll, Proben in einem Abstand von bis zu 20 m zum letzten Umlenkspiegel für den Laserstrahl zu analysieren, aber dies setzt eine gerade, frei einsehbare Strecke zwischen dem letzten Spiegel und der zu analysierenden Materialprobe voraus. Gerade dies ist aber in der Hüttenindustrie wegen der Staub- und Rauchbelastung der Luft, wegen nicht vorhandener freier Räume und wegen der Notwendigkeit der freien Zugänglichkeit der Aggregate nicht gegeben. Es muß zusätzlich berücksichtigt werden, daß metallurgische Gefäße in der Regel beweglich, z.B. kippbar, sind und während des Betriebes Schwingungen und Stößen unterliegen.

Die der Erfindung zugrunde liegende Aufgabe wird durch die Vorrichtung gemäß den Ansprüchen gelöst.

Mit Hilfe einer solchen Vorrichtung ist eine kontinuierliche Probenanalyse durch laserinduzierte Emissionsspektroskopie unter rauhen Bedingungen (mit Stößen und Schwingungen ausgesetzten Materialproben) und auch an beweglichen Probenbehältem, wie z.B. Konvertern, unter Einhaltung eines großen Abstandes zwischen Probe und Laserquelle möglich.

Je nach geforderter Beweglichkeit zwischen den Materialproben und der Laserquelle sowie je nach zu überbrückender Entfernung weist der Arm mehrere bewegliche Gelenke und gegebenenfalls ein oder mehrere starre(s) Gelenk(e) auf und sind als Spiegel und/oder Prisma ausgebildete Umlenkeinrichtungen ausschließlich an den Gelenken, die mit Armteilen miteinander verbunden sind, sowie gegebenenfalls an den Enden des Armes vorgesehen.

Die besonders einfache Konstruktion ergibt sich, weil der Arm mit Zusatzeinrichtungen zur Leitung der Rückstrahlen zum Spektrometer ausgestattet ist, die ebenfalls von Spiegeln und/oder Prismen gebildet sind.

Um auch die Temperatur einer Probe bestimmen zu können, ist die Auswerteeinrichtung zusätzlich mit einem Pyrometer versehen.

Für besondere Einsatzzwecke ist zweckmäßig die Auswerteeinrichtung mit einer Einrichtung zur Erstellung fotografischer Aufnahmen ausgestattet.

Die Anordnung der Fokussiereinrichtung kann entweder zwischen dem vorletzten und dem letzten vor der Materialprobe angeordneten Gelenk vorgesehen sein oder zwischen dem vor der Materialprobe letzten Gelenk und der Materialprobe. Um eine Veränderung der Probenlage, die sich beispielsweise durch Verschleiß der feuerfesten Auskleidung eines metallurgischen Gefäßes ergeben kann, gerecht zu werden, ist vorzugsweise die Fokussiereinrichtung in Längsrichtung des Laserstrahles bewegbar, wobei zweckmäßig die Bewegung der Fokussiereinrichtung mittels der Rückstrahlen steuerbar ist.

Um eine Veränderung der Lage der Materialprobe berücksichtigen zu können, ist es auch möglich, die Vorrichtung so zu gestalten, daß ein zwischen zwei Gelenken oder zwischen einem Gelenk und der Materialprobe angeordneter Armteil zur Konstanthaltung des Abstandes zwischen der Fokussiereinrichtung und der Materialprobe mittels einer Bewegungseinrichtung teleskopisch verlängerbar und verkürzbar ist.

Für eine chemische Analyse von heißen Materialproben ist vorteilhaft der Arm mit einem Hitzeschutz versehen, wobei zusätzlich auch der Arm mit einer Kühleinrichtung versehen ist, mit der ein Kühlmedium, wie eine Flüssigkeit oder ein Spülgas, wie Argon, durch den Arm leitbar ist. Hierbei ist es vorteilhaft, wenn der Arm mit einer Temperaturmeßeinrichtung und einem Regelkreis zur Minimierung von Temperaturunterschieden innerhalb des Armes ausgestattet ist.

Zur Sicherung einer optimalen Beweglichkeit des Armes sind der Laserstrahl und gegebenenfalls die Rückstrahlen bezüglich der Drehachse der beweglichen Gelenke rotationssymmetrisch geführt, insbesondere mittels der als Spiegel und/oder Prismen ausgebildeten Umlenkeinrichtungen.

Eine platzsparende Konstruktion ist dadurch gekennzeichnet, daß die als Spiegel ausgebildeten Umlenkeinrichtungen mit segmentiert angeordneten Reflexionsschichten versehen sind, wobei eine Reflexionsschicht für den Laserstrahl und eine weitere Reflexionsschicht für die Rückstrahlen dient.

Gemäß einer weiteren ebenfalls platzsparenden Konstruktion ist die Fokussiereinrichtung mit segmentierten Linsen und/oder Spiegeln ausgestattet.

Zur Vermeidung einer Gewichtsbelastung eines die Materialprobe aufweisenden Behälters durch den Arm und zwecks Ausgleichens von Schwingungen der Materialprobe bzw. eines die Materialprobe aufnehmenden Gefäßes, wie eines Stahlwerkskonverters etc., ist zweckmäßig der Arm über einen Gewichtsausgleich momentenfrei im Raum gelagert, vorzugsweise mittels eines Gegengewichtes.

Ein besonders wichtiges Anwendungsgebiet der erfindungsgemäßen Vorrichtung ist die Hüttenindustrie, insbesondere die Eisenhüttenindustrie. Bei der Bestimmung der chemischen Zusammensetzung von Metallschmelzen kommt es immer wieder zu stoßartigen Bewegungen des die Metallschmelze aufnehmenden metallurgischen Gefäßes sowie zu Verschiebungen zwischen einer feuerfesten Auskleidung des metallurgischen Gefäßes und dessen äußerem Mantel. Mit der erfindungsgemäßen Konstruktion gelingt ein Ausgleich dieser stoßartigen Bewegungen bzw. eventuell auftretender Schwingungen des metallurgischen Gefäßes oder eventueller Verschiebungen der feuerfesten Auskleidung.

Innerhalb der Hüttenindustrie erweist sich die Erfindung besonders vorteilhaft für kippbare metallurgische Gefäße, wie z.B. Stahlwerkskonverter, wobei ein Armteil des Armes parallel zur Kippachse oder besonders vorteilhaft, da nicht bewegungseinschränkend, direkt in der Kippachse angeordnet ist. Ein Stahlwerkskonverter mit einer Vorrichtung zur Bestimmung der chemischen Analyse einer Stahlschmelze ist aus der eingangs beschriebenen WO-A - 97/22859 bekannt.

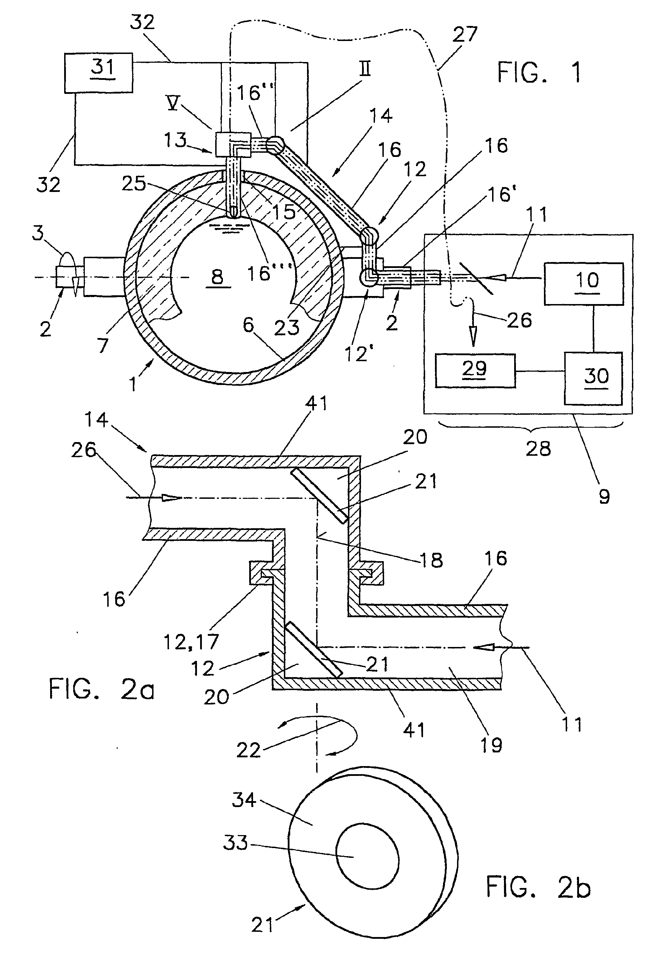

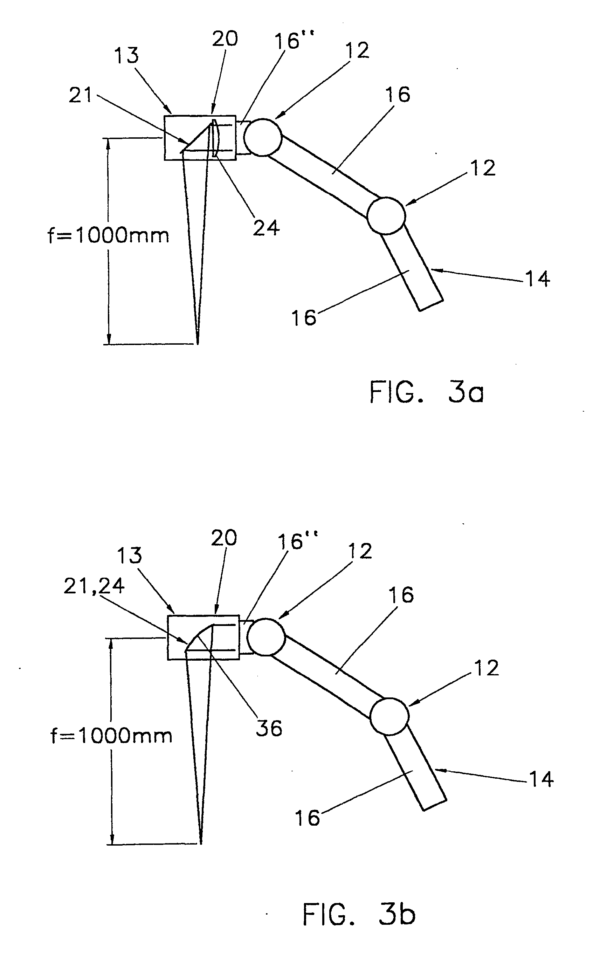

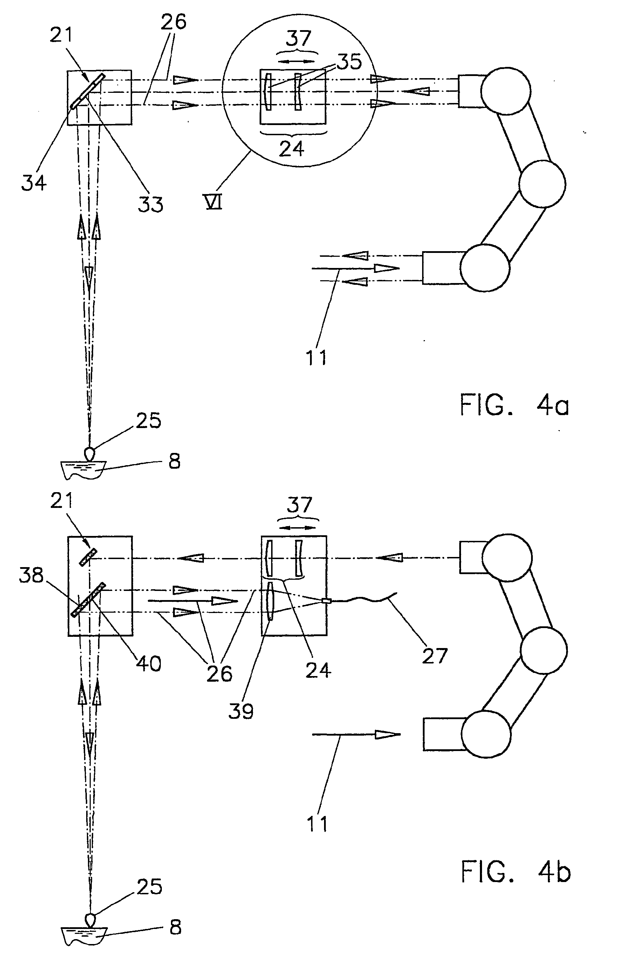

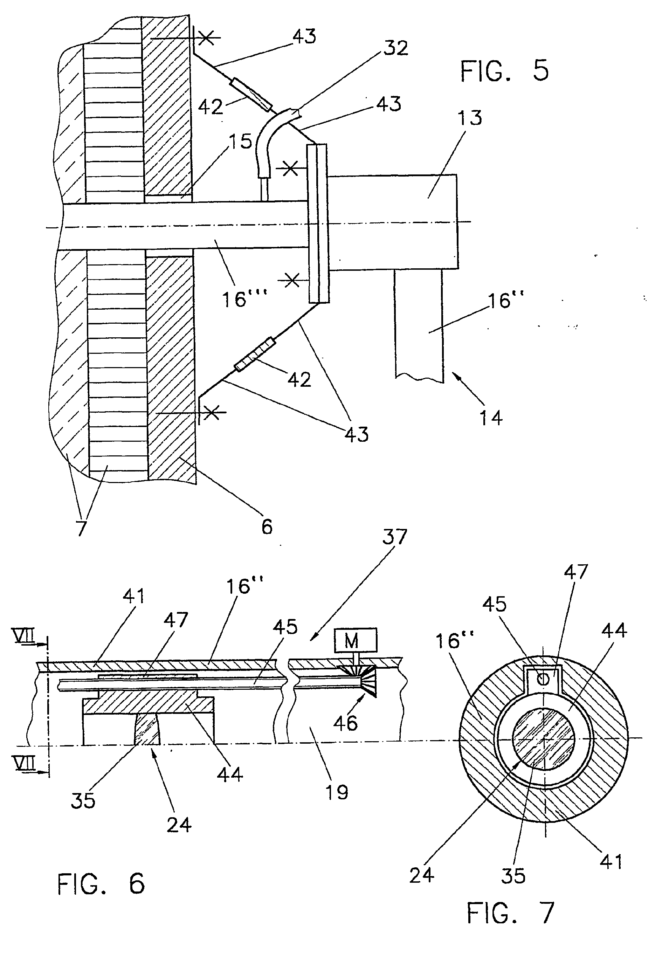

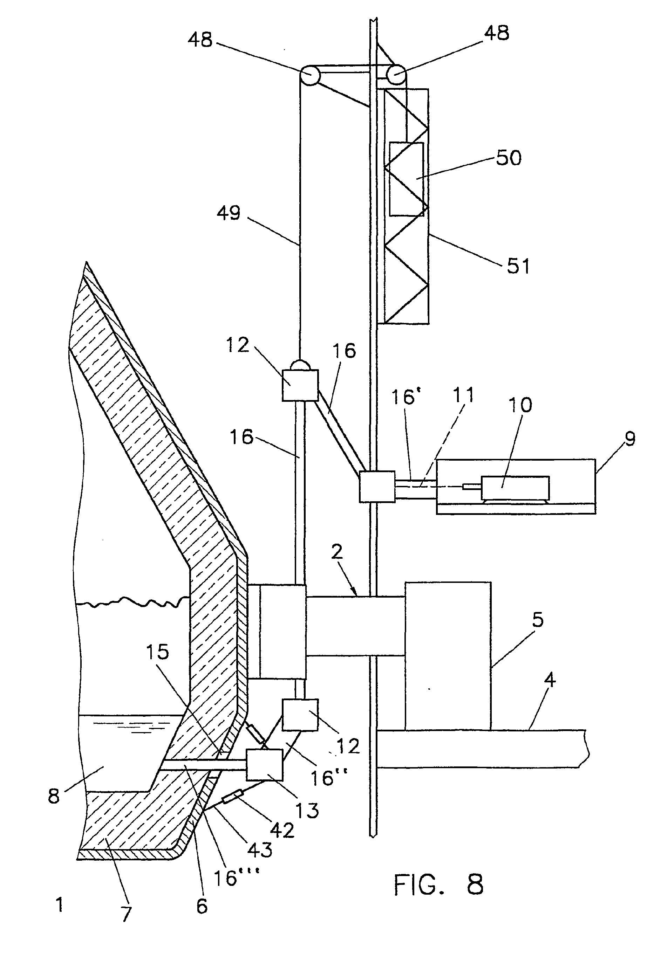

Die Erfindung ist nachfolgend anhand der schematischen Zeichnung an mehreren Ausführungsbeispielen näher erläutert, wobei Fig. 1 die Anwendung der erfindungsgemäßen Vorrichtung für einen Stahlwerkskonverter zeigt, der im Horizontalschnitt dargestellt ist. Die Fig. 2a und 2b geben ein Detail II der Fig. 1 im Vertikalschnitt (Fig. 2a) und in Teilansicht (Fig. 2b) wieder. Die Fig. 3a und 3b sowie 4a und 4b veranschaulichen Details der erfindungsgemäßen Vorrichtung in jeweils unterschiedlichen Varianten. Fig. 5 gibt ein Detail V der Fig. 1 wieder, Fig. 6 zeigt ein Detail VI der Fig. 4a und Fig. 7 einen Schnitt gemäß der Linie VII-VII der Fig. 6. Fig. 8 veranschaulicht eine Ausführungsform der erfindungsgemäßen Vorrichtung mit Gewichtsausgleich, teilweise geschnitten, teilweise in Seitenansicht.

In Fig. 1 ist ein Stahlwerkskonverter 1 im Horizontalschnitt dargestellt, der um seine Tragzapfen 2 schwenkbar bzw. kippbar ist, u.zw. wie durch den Pfeil 3 veranschaulicht. Die Tragzapfen 2 sind in nicht näher dargestellten Lagern, die am Fundament bzw. an der Konverterbühne 4 über Lagerböcke 5 (vgl. Fig. 8) abgestützt sind, gelagert. Der Konverter 1 weist einen Stahlmantel 6 auf, der innenseitig mit einer Feuerfestauskleidung 7 versehen ist. Im Inneren des Konverters 1 befindet sich eine Stahlschmelze 8.

Zur Durchführung einer chemischen Analyse mit Hilfe laserinduzierter Emissionsspektroskopie ist in einem Schutzgehäuse 9 abseits des Konverters 1 eine Laserquelle 10 vorgesehen. Der von der Laserquelle 10 erzeugte Laserstrahl 11, der durch den Pfeil veranschaulicht ist, wird über einen mit mehreren beweglichen Gelenken 12 und einem starren Gelenk 13 ausgestatteten Arm 14 zu einer Öffnung 15, die durch den Stahlmantel 6 des Konverters 1 und durch die feuerfeste Auskleidung 7 desselben hindurchgeht, und weiter gegen die im Inneren des Konverters 1 befindliche Stahlschmelze 8 geleitet. Die beweglichen Gelenke 12 des Armes 14, die jeweils zwei Armteile 16 miteinander verbinden, sind vorzugsweise wie in Fig. 2 dargestellt ausgebildet. Die aus Fig. 2 erkennbaren Armteile 16 sind über eine Dreh-Gelenkverbindung 17 miteinander verbunden, so daß sie um eine Drehachse 18 gegeneinander verschwenkt werden können. Der Arm 14 weist einen durchgehenden Hohlraum 19 für den Laserstrahl 11 auf. An den Umlenkstellen 20 des Hohlraumes 19 ist jeweils ein Spiegel 21 oder ein Prisma zur Umlenkung des Laserstrahles 11 vorgesehen. Die Gegeneinander-Verdrehbarkeit der beiden durch ein Gelenk 12 verbundenen Armteile 16 ist durch einen Doppelpfeil 22 in Fig. 2 veranschaulicht.

Die in Fig. 2 dargestellten Spiegel 21 in den Gelenken 12 sind jeweils in Paaren angebracht, was eine freie Rotation der Armteile 16 um die Verbindungsachse der beiden Spiegel 21, die mit der Drehachse 18 identisch ist, erlaubt, ohne dabei die Eigenschaften des reflektierten Lichtes zu verändern. Durch Kombination mehrerer Gelenke 12, die jeweils durch gerade stabile Rohre, die die Armteile 16 bilden, verbunden sind, kann ein beweglicher Arm in einer Länge von 2 m und auch weit mehr angefertigt werden.

Die Spiegel 21 bestehen aus polierten Metalloberflächen (z.B. aus poliertem Kupfer), aus auf einem Substrat abgeschiedenen Metallschichten (z.B. aufgedampftes Aluminium oder Silber), die gegebenenfalls noch mit einer dünnen Schutzschicht, z.B. aus Magnesiumfluorid, versehen sind, oder aus dielektrischen Schichtsystemen, die ebenfalls auf einem Substrat aufgebracht sind.

Gemäß Fig. 1 führt ein erster Armteil 16' durch den Tragzapfen 2. Er kann jedoch auch daneben vorbeigeführt werden (vgl. Fig. 8). Ein vom ersten Gelenk 12' ausgehender Armteil 16 ist an der Außenseite des Tiegels mittels einer Abstützung 23 befestigt.

Die beiden in Laserstrahlrichtung letzten Armteile 16" und 16''' sind über ein starres Gelenk 13 miteinander verbunden, wobei der letzte Armteil 16"', der durch die feuerfeste Auskleidung 7 des Konverters 1 hindurchführt, mit der feuerfesten Auskleidung 7 starr verbunden ist. Um Bewegungen der feuerfesten Auskleidung 7 gegenüber dem Stahlmantel 6 des Konverters 1 ohne Beschädigung dieses letzten Armteiles 16''' zu ermöglichen, ist die Öffnung 15 im Bereich des Stahlmantels 6 im Durchmesser größer gehalten als der Außendurchmesser des letzten Armteiles 16"'. Dieser letzte Armteil 16''' weist nur einen sehr geringen Innendurchmesser auf; dieser liegt zweckmäßig zwischen 5 und 50 mm.

Eine Fokussiereinrichtung 24 befindet sich entweder im vorletzten oder letzten Armteil 16", 16'''. Diese Fokussiereinrichtung 24 kann entweder wie in Fig. 4a dargestellt ausgebildet sein, oder sie kann auch, wie aus Fig. 3 ersichtlich ist, im Inneren des starren Gelenkes 13 vorgesehen sein und von einer Sammellinse oder einem konkaven Spiegel, der gleichzeitig eine Umlenkeinrichtung 21 darstellt, gebildet sein.

Der enge Enddurchmesser des Hohlraumes des letzten Armteiles 16''' sichert eine hinreichend stabile Oberfläche der Stahlschmelze 8, auf der durch den fokussierten Laserstrahl 11 ein Plasma 25 gezündet wird. Das vom Plasma 25 emittierte Licht sowie anderes von der Oberfläche der Stahlschmelze 8 ausgehendes Licht, nachfolgend Rückstrahlen 26 genannt, wird gemäß der Darstellung nach Fig. 1 über einen Lichtwellenleiter 27 zu einer geeigneten Auswerteeinrichtung 28 geführt. Diese Auswerteeinrichtung 28, die mit einer Detektionseinheit 29 und einem Auswerterechner 30 versehen ist, befindet sich ebenfalls im Schutzgehäuse 9.

Zur Beaufschlagung des Armes 14 mit Spül- und/oder Kühlmittel dient eine schematisch dargestellte Versorgungseinheit 31. Diese ist auch mit einer Steuerung zur hinreichenden Versorgung des Armes 14 versehen, wobei vorteilhaft im Arm 14 eine Temperaturmeßeinrichtung vorgesehen ist, mit deren Hilfe die Steuerung der Versorgung des Armes 14 mit Spül- und/oder Kühlmittel durchgeführt werden kann. Der Arm 14 ist vorzugsweise außenseitig mit einem Hitzeschutz versehen, und sein Hohlraum 19 ist an eine von der Versorgungseinheit 31 ausgehende, ein Kühlmedium zuführende Leitung 32 angeschlossen, beispielsweise an eine Zuleitung für ein Spülgas, wie Argon. Hierdurch wird die Fokussiereinrichtung 24 ebenfalls gegen Hitzeeinwirkung geschützt. Innerhalb des letzten Armteiles 16''' oder innerhalb des letzten starren Gelenkes 13 ist zur Vermeidung von Hitzeabstrahlung aus dem Inneren des Konverters 1 ein Fenster vorgesehen, das unter einem derartigen Winkel zum Laserstrahl 11 eingebaut ist, so daß Reflexionsverluste minimiert werden.

Mit Hilfe der Auswerteeinrichtung 28 kann nicht nur die chemische Zusammensetzung der Stahlschmelze 8 ermittelt werden, sondern es können auch weitere aus den Rückstrahlen 26 ermittelbare Informationen eruiert werden, wie die Temperatur der Stahlschmelze 8, die Temperatur des laserinduzierten Plasmas 25, die genaue Lage der Oberfläche der Stahlschmelze 8 sowie auch ein Videobild der Oberfläche der Stahlschmelze 8.

Gemäß der Erfindung (vgl. Fig.4a)., bei der sowohl der Laserstrahl 11 und die Rückstrahlen 26, d.h. die Plasmaemission und sonstiges von der Probenoberfläche ausgehendes Licht, durch einen einzigen Arm 14 geleitet werden, ist es notwendig, daß die Spiegel 21 sowohl für den Laserstrahl 11 als auch für die zurückgesandten Rückstrahlen 26 eine hinreichend hohe Reflektivität über den gesamten benötigten Spektralbereich aufweisen, ohne daß die Spiegel 21 durch die intensive gepulste Laserstrahlung 11 beschädigt werden. Dies kann bei Vollspiegeln entweder durch geeignete Materialauswahl, durch geeignete Auswahl der Laserwellenlänge oder des Strahldurchmessers erreicht werden. So gibt es Spiegelsysteme mit einer relativ hohen Reflektivität (insbesondere Al, Cu usw.) vom mittleren Infrarot über den gesamten sichtbaren Bereich bis weit in den Ultraviolettbereich. Wählt man den Strahldurchmesser des Laserstrahles groß genug, so können diese Spiegel 21 auch bei hohen Laserleistungen benutzt werden, insbesondere wenn die Spiegel 21 zusätzlich gekühlt werden und der gesamte Arm 14 mit einem entsprechenden Schutzgas (zum Beispiel Argon) gespült wird.

Eine weitere Möglichkeit besteht in der Verwendung von segmentierten Spiegeln, wie in Fig. 2b veranschaulicht. Hier ist in der Mitte jedes Spiegels 21 eine Zusatzeinrichtung, gebildet von einem Hochleistungslaserspiegel 33, eingefügt, der von einem zweiten Ringspiegel 34 radial umgeben ist, der speziell die Rückstrahlen reflektiert. Bei Verwendung eines gepulsten Nd.YAG-Lasers mit einer Wellenlänge von 1064 nm, der oft zur laserinduzierten Emissionsspektroskopie benutzt wird, kommen zum Beispiel dielektrische Hochleistungsspiegel, die speziell auf die Wellenlänge des Lasers abgestimmt sind, zum Einsatz. Diese werden in hochreflektierende, mit einer Magnesiumfluoridschicht versehene Aluminiumspiegel eingelassen, die speziell für den Ultraviolettbereich sehr hohe Reflektivitäten aufweisen. Es ist klar, daß die Funktion solcher Spiegel 21 nicht von der genauen Form der Spiegel 21 abhängt. So könnten statt runder Spiegel 21 auch rechteckige oder elliptische Spiegel 21 und andere Formen in beliebigen Kombinationen verwendet werden. Wichtig ist hier, daß der Durchmesser des Laserstrahles 11 die gleiche oder eine kleinere Dimension wie der Hochleistungsspiegel 33 aufweist.

Um auf der Probenoberfläche durch den Laserstrahl 11 ein leuchtendes Plasma 25 zu erzeugen, muß man den Laserstrahl 11, wie oben erwähnt, mit Hilfe einer Fokussiereinrichtung 24 konzentrieren. Zur Konzentration benutzt man entweder eine oder mehrere optische Linsen 35 zusammen mit Planspiegeln 21 oder Konkavspiegel 36 (Fig. 3b), unter Umständen ebenfalls in Kombination mit weiteren Planspiegeln 21. In den Fig. 3 a und 3b sind solche Einrichtungen schematisch dargestellt. Dabei können sowohl die Planspiegel 21 als auch die Konkavspiegel 36 als Vollspiegel oder als segmentierte Spiegel ausgebildet sein. Bei Verwendung von Linsen 35 müssen Linsenfehler berücksichtigt werden, die zu unterschiedlichen Brennweiten bei verschiedenen Wellenlängen führen können, was Probleme bereitet, wenn man mit diesen Linsen 35 auch das zurückgesandte Licht wieder sammeln will. Dagegen ist ein Konkavspiegel 36 immer dispersionsfrei. Man kann allerdings achromatische Linsensysteme verwenden. Typische Brennweiten, f, der fokussierenden Elemente für das in Fig. 1 beschriebene Beispiel eines Stahlkonverters liegen in beiden Fällen in der Größenordnung von etwa 1000 mm.

In der Praxis ist die Lage der Probenoberfläche oft nicht fixiert, sondern sie ändert sich im Laufe des Produktionsprozesses, z. B. bei einem metallurgischen Gefäß (Konverter 1) durch Abbrand des Ausmauerungsmaterials 7. In der Fokussiereinrichtung 24 kann deshalb eine Verstelleinheit 37 (vgl. Fig. 6) zum Ausgleich dieser Veränderung integriert sein. In Fig. 4a ist beispielhaft ein Aufbau für den Fall, daß sowohl der Laserstrahl 11 als auch die Rückstrahlen 26 durch einen einzigen Arm 14 geleitet werden, in Fig. 4b für den Fall, daß Rückstrahlung 26 ganz oder teilweise über einen zusätzlichen Lichtwellenleiter 27 geleitet wird, dargestellt.

Gemäß Fig. 4a wird der Laserstrahl 11 über den Arm 14 geführt und mittels einer Fokussiereinrichtung 24 auf die Materialprobe 8 fokussiert, um dort ein laserinduziertes Plasma 25 zu zünden. Dabei wird der Laserstrahl 11 z.B. über den zentralen Teil 33 eines segmentierten Spiegels 21 zusätzlich um 90° umgelenkt. Um Variationen des Abstandes zwischen der Materialprobe 8 und dem letzten Umlenkspiegel 21 bzw. dem Linsensystem 24 auszugleichen, ist das Linsensystem 24 auf einer Verstelleinheit 37 montiert. Zusätzlich kann eine Verstelleinheit in das Linsensystem 24 selbst integriert sein, die den Abstand der einzelnen Linsen 35 variiert.

Die vom Plasma 25 oder von der Materialprobe 8 selbst emittierten Rückstrahlen werden ebenfalls über den segmentierten Spiegel 21 umgelenkt und wiederum mit dem Linsensystem 24 über denselben Arm 14 zur Auswerteeinrichtung 28 geleitet. Detektiert man das zurückgesandte Signal, d.h. die Rückstrahlen 16, als Funktion des durch die Verstelleinheit 37 veränderbaren Probenabstandes, so kann man daraus den exakten Abstand zwischen Linsensystem 24 und Materialprobe 8 ermitteln.

Fig. 4b zeigt eine Variation dieses Aufbaues. Wiederum wird der Laserstrahl 11 über den Arm 14 geführt, mittels einer Fokussiereinrichtung 24 fokussiert und mit Hilfe eines Umlenkspiegels 21 auf die Materialprobe 8 umgelenkt, um dort ein Plasma 25 zu zünden. Die vom Plasma 25 oder von der Materialprobe 8 selbst emittierten Rückstrahlen 26 werden durch einen Strahlteiler 38 vom Laserstrahlengang getrennt und umgelenkt und über eine zusätzlich im Linsensystem angebrachte Linse 39 in einen Lichtwellenleiter 27 eingekoppelt. Über diesen wird es dann zur Auswerteeinrichtung 28 geführt. Wiederum erlaubt eine Verstelleinheit 37 die Variation des Abstandes zwischen Linsensystem und Probe.

Der Strahlteiler 38 ist gemäß Fig. 4b durch einen mit einem Loch 40 versehenen Spiegel realisiert, kann aber auch aus anderen optischen Elementen, z.B. aus teildurchlässigen oder wellenlängenabhängigen Spiegeln, aufgebaut sein. Solche Strahlteiler 28 können auch an anderer Stelle dazu benutzt werden, um die Rückstrahlen 26 ganz oder teilweise aus dem Strahlengang des Laserstrahles 11 auszukoppeln, wie dies in Fig. 1 angedeutet ist. Auch sequentielle Anordnung solcher Anordnungen sind möglich, um die Rückstrahlen 26 mit verschiedenen Auswerteeinrichtungen 28, z.B. einem oder mehreren Spektrometern, einem Pyrometer und einer Videokamera auszuwerten. Dabei ist es möglich, daß sich diese Strahlteiler 38 und die Auswerteeinrichtungen 28 an verschiedenen Stellen im Aufbau der Vorrichtung befinden. So könnte man beispielsweise den Laserstrahl 11 und das von der Materialprobe 8 abgesandte Infrarotlicht über den Arm 14 leiten und am Ende des Armes 14 das Infrarotlicht auskoppeln und zur Temperaturmessung in ein Pyrometer leiten. Ein Teil der Rückstrahlen 26 des laserinduzierten Plasmas 25 im ultravioletten und sichtbaren Spektralbereich wird wie in Fig. 4b vor dem Umlenkspiegel 21 ausgekoppelt und über einen langen Lichtwellenleiter 27 zu einem Spektrometer geführt, um mit Hilfe der Methode der laserinduzierten Emissionsspektroskopie den relativen Anteil z.B. der Elemente Eisen, Kohlenstoff, Silizium und Kupfer in der Probe zu messen. Ein anderer Teil der vom Plasma emittierten Rückstrahlen im Spektralbereich unterhalb von 185 nm, das sich nur bedingt über einen herkömmlichen Lichtwellenleiter 27 übermitteln läßt, wird noch vor dem Eingang des Lichtwellenleiters 27 ausgekoppelt. Mittels eines auf eine einzige Wellenlänge eingestellten Minispektrometers wird der Schwefelgehalt in der Probe gemessen. Zusätzlich wird das sichtbare Bild der Materialprobe 8 mit einer kleinen Videokamera aufgezeichnet, die man neben dem Eingang des Lichtwellenleiters 27 montiert. Es ist klar, daß viele weitere offensichtliche Variationen der erfindungsgemäßen Vorrichtung möglich sind.

Die Vorteile der erfindungsgemäßen Vorrichtung liegen hauptsächlich darin, daß der Laserstrahl 11 in guter Qualität, d.h. insbesondere mit nahezu unverändertem Modenprofil und mit geringer Divergenz, durch den Arm 14 über eine relativ lange Strecke transportiert wird. Dadurch ist es zum einen möglich, die Laserquelle 10 hinreichend weit von dem industriellen metallurgischen Aggregat 1 zu entfernen, in dem sich die zu analysierende Materialprobe 8 befindet, und somit den Aufwand für Schutzmaßnahmen gegen die harten Umgebungsbedingungen entscheidend zu reduzieren, zum anderen ist es dank der guten Strahlqualität nach wie vor möglich, den Laserstrahl 11 nach Austritt aus dem Arm 14 mit hinreichend großen Brennweiten zu fokussieren. Erst dies erlaubt z.B. den Betrieb des Systems an einer Öffnung 15 an einem metallurgischen Gefäß 1 (z.B. Stahlkonverter 1). Dadurch unterscheidet sich das erfindungsgemäße Verfahren von der Übertragung des Laserlichtes durch flexible Lichtwellenleiter, z.B. auf Glasfaserbasis, bei der das Laserlicht am Strahlausgang eine so hohe Divergenz aufweist, daß entweder mit sehr kleinen Brennweiten gearbeitet werden muß oder unrealistisch große Linsen oder Konkavspiegel zur Fokussierung verwendet werden müssen.

Man benötigt die kleinen Fokussierflächen für hohe Strahlintensitäten. Dazu kommt, daß für die Methode der laserinduzierten Emissionsspektroskopie besonders Laser mit kurzen Pulsen mit einer Pulslänge von unterhalb einer Mikrosekunde verwendet werden, um segregiertes Verdampfen zu vermeiden und den thermischen Untergrund des Plasmas 25 zeitlich herausfiltern zu können. Die Übertragung von Strahlen 11 hinreichend großer Intensität solcher Kurzpulslaser über Glasfasern ist aber nach wie vor technisch nicht vollständig gelöst. Der erfindungsgemäß vorgesehene Arm 14 weist hingegen Gelenke 12 auf, die über stabile Rohre 41 verbunden sind. Die Länge der Rohre 41 ist nach oben durch die Stabilität der Rohre 41 beschränkt, wobei eine Länge von einigen Metern kein Problem darstellt.

Zusätzlich können in den Arm 14 Teleskopelemente mit variabler Länge integriert werden. Solche Arme 14 lassen sich beliebig kombinieren und sind in einer industrietauglichen Version in gas- und staubdichter Ausführung eventuell mit zusätzlicher Kühlvorrichtung einfach herstellbar. Dadurch lassen sich in zwei oder drei Dimensionen beliebig bewegliche Arme 14 konstruieren, und der Laserstrahl 11 läßt sich somit ebenfalls auf nahezu beliebige Punkte im Raum fokussieren. Allerdings muß berücksichtigt werden, daß man bei jdeder Reflexion Verluste hat, die sich mit der Anzahl der Spiegel 21 potenzieren. Gemäß der vorliegenden Erfindung werden sowohl das Licht des Laserstrahles 11 als auch die von der Materialprobe 8 zur Auswerteeinrichtung 28 zur Analyse zurückgesandten Rückstrahlen 26 über denselben Arm 14 geleitet. Dadurch wirkt sich eine leichte Positionsveränderung des Laserfokus auf der Materialprobe 8 z.B. durch einseitige Erwärmung des Rohres 41 des letzten Armteiles 16 oder durch Vibrationen des Armes 14 praktisch nicht auf die Intensität der Rückstrahlen 26 aus, da die Auswerteeinrichtung 28 durch die Verwendung derselben Spiegel 21 im Arm 14 immer den gleichen Bereich des Plasmas auf der Materialprobe 8 einsieht. Dagegen kann es bei einer getrennten Rückführung der Rückstrahlen 26 bei Positionsschwankungen des Laserfokus auf der Materialprobe 8 zu Intensitätsschwankungen kommen.

In Fig. 5 ist die Abstützung der letzten starren Gelenkstelle 13 an einem metallurgischen Gefäß 1, d.h. an dessen metallischem Außenmantel 6, veranschaulicht. Infolge der Einbettung des letzten Armteiles 16''' in das feuerfeste Material 7 kann es durch eine Gewichtsbelastung dieses Armteiles 16''' zu Verbiegungen kommen. Um dies zu vermeiden, ist die letzte Gelenkstelle 13, die mit dem letzten Armteil 16''' starr verbunden ist, über Spannschlösser 42 und Gewindestangen 43 am metallischen Außenmantel 6 eines metallurgischen Gefäßes 1 starr fixiert. Mit Hilfe der Spannschlösser 42, die sich zweckmäßig in drei unterschiedliche Richtungen, die etwa auf einem Kegelmantel liegen, erstrecken, läßt sich eine genaue Justierung des letzten Gelenkes 13 durchführen, so daß der letzte Armteil 16''' ohne Gewichtsbelastung durch das letzte Gelenk 13 und den Arm 14 in das Innere des metallurgischen Gefäßes 1 ragt. Mit Hilfe der Spannschlösser 42 läßt sich jederzeit, sollte es zu Verschiebungen des feuerfesten Materials 7 gegenüber dem Außenmantel 6 des metallurgischen Gefäßes 1 kommen, eine Nachjustierung durchführen.

Die Fig. 6 und 7 veranschaulichen eine konstruktive Lösung für die Längsbewegung einer Fokussiereinrichtung 24 innerhalb eines Armteiles 16". Hierbei wird ein die Linsen 35 tragender Rohrteil 44 mit Hilfe einer Gewindestange 45, die elektrisch über einen Motor M oder manuell über ein Getriebe 46 angetrieben wird, bewegt. Der die Linsen 35 aufweisende Rohrteil 44 wird im Armteil 16" mit einer Passung geführt. Er weist an seiner Außenseite eine von der Gewindestange 45 durchsetzte Mutter 47 auf.

Anstelle einer Bewegung der Fokussiereinrichtung 34 längs eines Armteiles 16" könnte der Armteil 16" selbst teleskopisch ausgebildet sein, wobei zwei ineinander verschiebbare Rohre ebenfalls mit Hilfe einer Gewindestange, wie in den Fig. 6 und 7 gezeigt ist, bewegt werden könnten.

Fig. 8 veranschaulicht eine mögliche Ausführungsform für einen Gewichtsausgleich für den Arm 14. Dieser ist mittels eines über Umlenkrollen 48 geführten Seiles 49 mit einem Gegengewicht 50 verbunden, das entlang einer Führung oder in einem Schutzgerüst 51 bewegbar geführt ist. Gemäß Fig. 8 ist der Arm 14 nicht durch den Tragzapfen 2 eines Stahlwerkskonverters 1 geführt, sondern parallel zu diesem außerhalb des Tragzapfens 2. Hieraus ergibt sich eine etwas eingeschränkte Bewegungsmöglichkeit, d.h. der Stahlwerkskonverter 1 kann nicht um 360° um die Tragzapfen 2 verschwenkt werden, sondern nur um einen geringeren Betrag.

Die Erfindung beschränkt sich nicht auf die in der Zeichnung dargestellten Ausführungsbeispiele, sondern sie kann in verschiedener Hinsicht modifiziert werden. Beispielsweise läßt sie sich für beliebige metallurgische Gefäße, d.h. auch für Elektroöfen und andere Einschmelzaggregate, wie z.B. Einschmelzvergaser etc., anwenden. Generell läßt sich die erfindungsgemäße Vorrichtung für beliebige schwer zugängliche Materialproben 8 verwenden, z.B. auch für radioaktive Proben. Sie erweist sich insbesondere für eine Überbrückung größerer Entfernungen zwischen der Laserquelle 10 und Materialproben und bei beengten Platzverhältnissen als zweckmäßig.

## Patentansprüche

1. Vorrichtung zur chemischen Analyse von festen oder geschmolzenen Materialproben (8) von in einem kippbaren metallurgischen Gefäß (1) befindlichen Metallschmelzen, wie Stahlschmelzen (8), basierend auf laserinduzierter Emissionsspektroskopie, mit einer einen Laserstrahl (11) erzeugenden Laserquelle (10), einer den Laserstrahl umlenkenden Umlenkeinrichtung (21), einer den Laserstrahl (11) fokussierenden Fokussiereinrichtung (24) sowie einer Rückstrahlen (26) eines vom Laserstrahl (11) auf der Materialprobe (8) gezündeten Plasmas (25) zu einer Auswerteeinrichtung (28), wie einem Spektrometer, leitenden Einrichtung (14, 21, 27), wobei zwischen der Laserquelle (10) und der Materialprobe (8) zur Leitung des Laserstrahles (11) ein mit mindestens einem beweglichen Gelenk (12) ausgestatteter und einen Hohlraum (19) für den Laserstrahl (11) aufweisender Arm (14) vorgesehen ist, an dessen Gelenkstelle die als Spiegel (21) oder Prisma ausgebildete Umlenkeinrichtung vorgesehen ist, wobei die Laserquelle (10) sowie die Auswerteeinheit (28) bewegungsunabhängig von der Materialprobe (8) angeordnet sind, und wobei der Arm (14) mit Zusatzeinrichtungen zur Leitung der Rückstrahlen (26) zum Spektrometer ausgestattet ist, die ebenfalls von Spiegeln (21) und/oder Prismen gebildet sind.

2. Vorrichtung nach Anspruch 1, **dadurch gekennzeichnet, daß** der Arm (14) mehrere bewegliche Gelenke (12) und gegebenenfalls ein oder mehrere starre(s) Gelenk(e) (13) aufweist und als Spiegel (21) und/oder Prisma ausgebildete Umlenkeinrichtungen ausschließlich an den Gelenken (12, 13), die mit Armteilen (16, 16") miteinander verbunden sind, sowie gegebenenfalls an den Enden des Armes (14) vorgesehen sind.

3. Vorrichtung nach Anspruch 1 oder 2, **dadurch gekennzeichnet, daß** die Auswerteeinrichtung (28) zusätzlich mit einem Pyrometer zur Temperaturbestimmung versehen ist.

4. Vorrichtung nach einem oder mehreren der Ansprüche 1 bis 3, **dadurch gekennzeichnet, daß** die Auswerteeinrichtung (28) mit einer Einrichtung zur Erstellung fotografischer Aufnahmen ausgestattet ist.

5. Vorrichtung nach einem oder mehreren der Ansprüche 1 bis 4, **dadurch gekennzeichnet, daß** die Fokussiereinrichtung (24) zwischen dem vorletzten und dem letzten vor der Materialprobe (8) angeordneten Gelenk (12, 13) vorgesehen ist.

6. Vorrichtung nach einem oder mehreren der Ansprüche 1 bis 4, **dadurch gekennzeichnet, daß** die Fokussiereinrichtung (24) zwischen dem vor der Materialprobe (8) letzten Gelenk (13) und der Materialprobe (8) vorgesehen ist.

7. Vorrichtung nach einem oder mehreren der Ansprüche 1 bis 6, **dadurch gekennzeichnet, daß** die Fokussiereinrichtung (24) in Längsrichtung des Laserstrahles (11) bewegbar ist.

8. Vorrichtung nach Anspruch 7, **dadurch gekennzeichnet, daß** die Bewegung der Fokussiereinrichtung (24) mittels der Rückstrahlen (26) über eine Verstelleinheit (37) steuerbar ist.

9. Vorrichtung nach einem oder mehreren der Ansprüche 1 bis 7, **dadurch gekennzeichnet, daß** ein zwischen zwei Gelenken (12, 13) oder zwischen einem Gelenk (13) und der Materialprobe (8) angeordneter Armteil (16", 16''') zur Konstanthaltung des Abstandes zwischen der Fokussiereinrichtung (24) und der Materialprobe (8) mittels einer Bewegungseinrichtung teleskopisch verlängerbar und verkürzbar ist.

10. Vorrichtung nach einem oder mehreren der Ansprüche 1 bis 9, **dadurch gekennzeichnet, daß** der Arm (14) mit einem Hitzeschutz versehen ist.

11. Vorrichtung nach einem oder mehreren der Ansprüche 1 bis 10, **dadurch gekennzeichnet, daß** der Arm (14) mit einer Kühleinrichtung versehen ist, mit der ein Kühlmedium, wie eine Flüssigkeit oder ein Spülgas, wie Argon, durch den Arm leitbar ist.

12. Vorrichtung nach einem oder mehreren der Ansprüche 1 bis 11, **dadurch gekennzeichnet, daß** der Arm (14) mit einer Temperaturmeßeinrichtung und einem Regelkreis zur Minimierung von Temperaturunterschieden innerhalb des Armes (14) ausgestattet ist.

13. Vorrichtung nach einem oder mehreren der Ansprüche 1 bis 12, **dadurch gekennzeichnet, daß** der Laserstrahl (11) und die Rückstrahlen (26) bezüglich der Drehachse (18) der beweglichen Gelenke (12) rotationssymmetrisch geführt sind, u.zw. mittels der als Spiegel (21) und/oder Prismen ausgebildeten Umlenkeinrichtungen.

14. Vorrichtung nach Anspruch 3 und einem oder mehreren der Ansprüche 1 bis 13, **dadurch gekennzeichnet, daß** die als Spiegel (21) ausgebildeten Umlenkeinrichtungen mit segmentiert angeordneten Reflexionsschichten versehen sind, wobei eine Reflexionsschicht für den Laserstrahl (11) und eine weitere Reflexionsschicht für die Rückstrahlen (26) dient.

15. Vorrichtung nach einem oder mehreren der Ansprüche 1 bis 14, **dadurch gekennzeichnet, daß** die Fokussiereinrichtung (24) mit segmentierten Linsen und/oder Spiegeln ausgestattet ist, wobei ein Segment für den Laserstrahl (11) und ein Segment für die Rückstrahlen (26) vorgesehen ist.

16. Vorrichtung nach einem oder mehreren der Ansprüche 1 bis 15, **dadurch gekennzeichnet, daß** der Arm (14) über einen Gewichtsausgleich momentenfrei im Raum gelagert ist, vorzugsweise mittels eines Gegengewichtes (50).

17. Metallurgisches Gefäß (1), insbesondere für die Eisenhüttenindustrie mit einer Vorrichtung zur chemischen Analyse einer Schmelze (8), **gekennzeichnet durch** eine Vorrichtung nach einem oder mehreren der Ansprüche 1 bis 18.

18. Metallurgisches Gefäß nach Anspruch 17, **dadurch gekennzeichnet, daß** das Gefäß (1) in an sich bekannter Weise kippbar ist, insbesondere als Stahlwerkskonverter (1) ausgebildet ist, und ein Armteil (16') parallel zur Kippachse oder in der Kippachse angeordnet ist.

## Claims

1. A device for the chemical analysis of solid or molten material samples (8) of metal melts present in a tiltable metallurgical vessel (1), such as steel melts (8), based on the laser-induced emission spectroscopy, comprising a laser source (10) generating a laser beam (11), a deflection device (21) deflecting the laser beam, a focusing device (24) focusing the laser beam (11) as well as a device (14, 21, 27) that guides the reflections (26) of a plasma (25) ignited by the laser beam (11) on the material sample (8) to an evaluation device (28) such as a spectrometer, wherein, between the laser source (10) and the material sample (8), an arm (14) equipped with at least one movable joint (12) and having a cavity (19) for the laser beam (11) is provided for guiding the laser beam (11), with the deflection device shaped as a mirror (21) or a prism being provided at the articulation thereof, wherein the laser source (10) as well as the evaluation unit (28) are arranged so as to be independent of the material sample (8) in terms of their movements and wherein the arm (14) is equipped with accessory parts for guiding the reflections (26) to the spectrometer, which accessory parts are also formed by mirrors (21) and/or prisms.

2. A device according to claim 1, **characterized in that** the arm (14) has several movable joints (12) and optionally one or several rigid joint(s) (13) and deflection devices shaped as mirrors (21) and/or prisms are provided exclusively at the joints (12, 13) interconnected by arm parts (16, 16"), as well as optionally at the ends of the arm (14).

3. A device according to claim 1 or 2, **characterized in that** the evaluation device (28) is additionally equipped with a pyrometer for determining the temperature.

4. A device according to one or several of claims 1 to 3, **characterized in that** the evaluation device (28) is equipped with a device for taking photographic pictures.

5. A device according to one or several of claims 1 to 4, **characterized in that** the focusing device (24) is provided between the joint (12) arranged to be the penultimate one and the joint (13) arranged to be the last one before the material sample (8).

6. A device according to one or several of claims 1 to 4, **characterized in that** the focusing device (24) is provided between the last joint (13) before the material sample (8) and the material sample (8).

7. A device according to one or several of claims 1 to 6, **characterized in that** the focusing device (24) is movable in the longitudinal direction of the laser beam (11).

8. A device according to claim 7, **characterized in that** the movement of the focusing device (24) is controllable by the reflections (26) via an adjustment unit (37).

9. A device according to one or several of claims 1 to 7, **characterized in that** an arm part (16'', 16''') arranged between two joints (12, 13) or between a joint (13) and the material sample (8) is telescopically extendable and contractable by means of a movable device in order to keep the distance between the focusing device (24) and the material sample (8) constant.

10. A device according to one or several of claims 1 to 9, **characterized in that** the arm (14) is provided with a heat protection.

11. A device according to one or several of claims 1 to 10, **characterized in that** the arm (14) is provided with a cooling device by means of which a cooling medium such as a liquid or a circulation gas such as argon can be conducted through the arm.

12. A device according to one or several of claims 1 to 11, **characterized in that** the arm (14) is equipped with a device for measuring the temperature and a control circuit for minimizing any temperature differences within the arm (14).

13. A device according to one or several of claims 1 to 12, **characterized in that** the laser beam (11) and the reflections (26) are guided so as to be rotationally symmetrical relative to the axis of rotation (18) of the movable joints (12), by means of the deflection devices shaped as mirrors (21) and/or prisms.

14. A device according to claim 3 and one or several of claims 1 to 13, **characterized in that** the deflection devices shaped as mirrors (21) are provided with reflective layers arranged in segments, with one reflective layer being provided for the laser beam (11) and another one for the reflections (26).

15. A device according to one or several of claims 1 to 14, **characterized in that** the focusing device (24) is equipped with segmented lenses and/or mirrors, with one segment being provided for the laser beam (11) and another one for the reflections (26).

16. A device according to one or several of claims 1 to 15, **characterized in that** the arm (14) is positioned in space in a moment-free fashion via a weight counterbalance, preferably by means of a counterweight (50).

17. A metallurgical vessel (1), in particular for the ironworks industry, comprising a device for the chemical analysis of a melt (8), **characterized by** a device according to one or several of claims 1 to 18.

18. A metallurgical vessel according to claim 17, **characterized in that** the vessel (1) is tiltable in a manner known per se, is designed in particular as a steelworks converter (1), and that an arm part (16') is arranged in parallel to the tilting axis or in the tilting axis.

## Revendications

1. Dispositif pour l'analyse chimique d'échantillons de matière solides ou fondus (8) de métal en fusion, comme de l'acier liquide (8), se trouvant dans un récipient métallurgique (1) pouvant basculer, se basant sur une spectroscopie d'émission induite par rayonnement laser, avec une source laser (10) produisant un rayon laser (11), un dispositif déflecteur (21) déviant le rayon laser, un dispositif de focalisation (24) focalisant le rayon laser (11), ainsi qu'un dispositif (14, 21, 27) dirigeant des rayons réfléchissants (26) d'un plasma (25) amorcé par le rayon laser (11) sur l'échantillon de matière (8) vers un dispositif d'évaluation (28), comme un spectromètre, un bras (14) équipé d'au moins une articulation mobile (12) et présentant un espace vide (19) pour le rayon laser (11) étant prévu, au point d'articulation duquel le dispositif déflecteur conçu comme un prisme ou comme un miroir (21) est prévu, la source laser (10), ainsi que l'unité d'évaluation (28) étant disposées de manière à ce que leurs déplacements soient indépendants de l'échantillon de matière (8), et le bras (14) étant équipé de dispositifs supplémentaires pour diriger les rayons réfléchissants (26) vers le spectromètre, qui sont également conçus par des miroirs (21) et/ou des prismes.

2. Dispositif selon la revendication 1, **caractérisé en ce que** le bras (14) comporte plusieurs articulations mobiles (12) et le cas échéant une ou plusieurs articulation(s) rigide(s) (13) et que des dispositifs déflecteurs conçus comme un miroir (21) et/ou un prisme sont prévus exclusivement au niveau des articulations (12, 13), reliées avec les parties de bras (16, 16"), ainsi que, le cas échéant, au niveau des extrémités du bras (14).

3. Dispositif selon la revendication 1 ou 2, **caractérisé en ce que** le dispositif d'évaluation (28) est pourvu en plus d'un pyromètre pour déterminer la température.

4. Dispositif selon une ou plusieurs des revendications 1 à 3, **caractérisé en ce que** le dispositif d'évaluation (28) est équipé d'un dispositif pour réaliser des prises de vue photographiques.

5. Dispositif selon une ou plusieurs des revendications 1 à 4, **caractérisé en ce que** le dispositif de focalisation (24) est prévu entre l'avant-dernière et la dernière articulation (12, 13) agencée avant l'échantillon de matière (8).

6. Dispositif selon une ou plusieurs des revendications 1 à 4, **caractérisé en ce que** le dispositif de focalisation (24) est prévu entre la dernière articulation (13) située avant l'échantillon de matière (8) et l'échantillon de matière (8).

7. Dispositif selon une ou plusieurs des revendications 1 à 6, **caractérisé en ce que** le dispositif de focalisation (24) peut être déplacé dans la direction longitudinale du rayon laser (11).

8. Dispositif selon la revendication 7, **caractérisé en ce que** le déplacement du dispositif de focalisation (24) au moyen des rayons réfléchissants (26) peut être commandé par l'intermédiaire d'une unité de réglage (37).

9. Dispositif selon une ou plusieurs des revendications 1 à 7, **caractérisé en ce qu'**une partie de bras (16", 16''') agencée entre deux articulations (12, 13) ou entre une articulation (13) et l'échantillon de matière (8) peut être allongée et raccourcie de manière télescopique pour maintenir constante la distance entre le dispositif de focalisation (24) et l'échantillon de matière (8) au moyen d'un dispositif de déplacement.

10. Dispositif selon une ou plusieurs des revendications 1 à 9, **caractérisé en ce que** le bras (14) est pourvu d'un écran thermique.

11. Dispositif selon une ou plusieurs des revendications 1 à 10, **caractérisé en ce que** le bras (14) est pourvu d'un dispositif de refroidissement avec lequel un milieu de refroidissement, comme un liquide ou un gaz de lavage, comme l'argon, peut être dirigé par le bras.

12. Dispositif selon une ou plusieurs des revendications 1 à 11, **caractérisé en ce que** le bras (14) est équipé d'un dispositif de mesure de température et d'un circuit régulateur pour minimiser les différences de température à l'intérieur du bras (14).

13. Dispositif selon une ou plusieurs des revendications 1 à 12, **caractérisé en ce que** le rayon laser (11) et les rayons réfléchissants (26) sont guidés à symétrie de révolution par rapport à l'axe de rotation (18) des articulations mobiles (12), précisément au moyen des dispositifs déflecteurs conçus comme des miroirs (21) et/ou des prismes.

14. Dispositif selon la revendication 3 et une ou plusieurs des revendications 1 à 13, **caractérisé en ce que** les dispositifs déflecteurs conçus comme des miroirs (21) sont pourvus de couches réfléchissantes agencées de manière segmentée, une couche réfléchissante servant pour le rayon laser (11) et une autre couche réfléchissante servant pour les rayons réfléchissants (26).

15. Dispositif selon une ou plusieurs des revendications 1 à 14, **caractérisé en ce que** le dispositif de focalisation (24) est équipé de lentilles segmentées et/ou de miroirs, un segment pour le rayon laser (11) et un segment pour les rayons réfléchissants (26) étant prévus.

16. Dispositif selon une ou plusieurs des revendications 1 à 15, **caractérisé en ce que** le bras (14) est installé de manière équilibrée dans l'espace par l'intermédiaire d'un équilibrage de poids, de préférence au moyen d'un contrepoids (50).

17. Récipient métallurgique (1), en particulier pour l'industrie sidérurgique, avec un dispositif pour l'analyse chimique d'une matière fondue (8), **caractérisé par** un dispositif selon une ou plusieurs des revendications 1 à 18.

18. Récipient métallurgique selon la revendication 17, **caractérisé en ce que** le récipient (1) peut basculer d'une manière connue en soi, est conçu en particulier comme un convertisseur d'aciérie (1), et **en ce qu'**une partie de bras (16') est agencée parallèlement à l'axe de basculement ou dans l'axe de basculement.
